# EUROPEAN PATENT SPECIFICATION

(11) **EP 3 636 079 B1**
(45) Date of publication and mention of the grant of the patent: **23.06.2021**
(21) Application number: 19202770.4
(22) Date of filing: 11.10.2019
(51) Int. Cl.: A23L 7/10, A21D 2/38, A21D 13/00, C12C 1/02

(54) **METHOD OF PREPARATION OF SPROUTED CEREAL GRAINS, OILSEEDS OR LEGUMES, FOOD PRODUCT CONTAINING SPROUTED GRAINS AND ITS USE**
VERFAHREN ZUR HERSTELLUNG VON GEKEIMTEN GETREIDEKÖRNERN, ÖLSAMEN ODER HÜLSENFRÜCHTEN, LEBENSMITTELPRODUKT MIT GEKEIMTEN KÖRNERN UND DEREN VERWENDUNG
PROCÉDÉ DE PRÉPARATION DE GRAINES DE CÉRÉALES GERMÉES, D'OLÉAGINEUX OU DE LÉGUMES, PRODUIT ALIMENTAIRE CONTENANT DES GRAINES GERMÉES ET SON UTILISATION

(30) Priority: 12.10.2018 SK 500982018 U
(43) Date of publication of application: 15.04.2020
(73) Proprietor: Naturex spol. s r.o., 945 01 Komárno (SK)
(72) Inventor: Ivanic, Vojtech, 940 55 Nové Zámky (SK)
(74) Representative: Porubcan, Róbert

(56) References cited:
- WO-A1-2015/021025
- GB-A- 1 408 781
- US-A1- 2012 263 824

## Description

### Field of technology

The invention concerns the method of preparation of the sprouted cereal grains, oilseeds or legumes, for example grains of wheat, rye, chickpeas, soybeans, sunflowers and so on, where the method mainly includes sprouting and conservation (preservation) by means of sterilization. The resulting product of conservation with high durability and without without chemical preservatives is new, too. The conserved grains are suitable as a semi-product in baking industry or in other fields of food industry, or they are intended for the direct use.

### State of the art

Non-milled cereal grains, oilseeds or legumes cannot be used in food industry. In order to increase the content of nutrients crucial for human nutrition, the non-milled grains are sprouted and subsequently they are used in various foord products. Proper sprouting of the seeds requires skills and technology which are not available to the producers of the food products, and therefore they request already sprouted grains from the suppliers of the non-milled seeds. The grains are conserved (preserved, canned) in the requested degree of sprouting by drying or freezing so they can be trasnported, stored and subsequently added to the resulting food product.

Publication US 2004/0191396 A1 discloses the benefits of the sprouted grains of linen; for example, the content of omega-3 fatty acids, whereby after the sprouting the grains are dried at low temperature, high flow and for a longer time. Drying changes the consistency of the sprouted grains and right before their addition during the production of the final food product the dried grains must be soaked to the desired consistency, which requires time and adherence to the technological procedure.

Method according to AU 2018202467 A1 discloses the drying and roasting of the sprouted wheat grains and usage of the flour made from these grains. The roasting lowers the humidity of the grains below 16% which increases the hardness of the grains. Such prepared grains in the non-milled form are not suitable for the direct consumption or for the mixing into the dough of the final food product.

File according to CN 107567750 A discloses the freezing of the sprouted grains. The freezing in general offers a possibility to conserve the grains in the chosen degree of sprouting, but it requires a creation of the freezing chain right to the moment of addition to the final food product. The preservation of the low temperature is energetically costly, it complicates the logistics and the frozne sprouted grains must be gently defrosted before addition to the final food product.

Publication WO 2015/021025 A1 describes a process for producing a sprouted grain comprising germinating at least one grain for less than about 2 days; and kilning with controlled air circulation at least one grain at a temperature ranging from at least about 49°C to about 93°C for less than about 20 hours to a moisture content of about 7% to about 16%.

Invention according to the disclosure US 2012/263824 A1 is related to processes for producing baking mixes in which a whole grain is sprouted and at least a portion of the sprouted whole grain's starch content is enzymatically converted into glucose to provide a sprouted whole grain mix.

Publication GB 1 408 781 A describes a process comprising steps: causing cereal grain to sprout; heating the sprouted grain above 65 C and incorporating the heated grain into a dough.

Such method is desired and not known which will allow to sprout and conserve the grains with a suitable period of durability, without the loss of nutrition values, without chemical conservation, without freezing and without drying. The product should have desired sensory and taste features and should be sufficiently durable, so that it can be transported without cooling, so that it can be stored and used outside the place of preparation as a semi-product or product for direct consumption.

### Essence of the invention

The present invention discloses a method of a preparation of sprouted cereal grains, oilseeds or legumes, including washing, swelling and packing of the grains, where after the washing the grains are for at least half an hour, preferably for 1,5 to 18 hours swelled in a drinkable water and after the swelling the non-absorbed drinkable water is separated, characterized by the fact, that
after the swelling the grains are placed on a perforated grate where they sprout under an influence of a heat and a humidity, whereby they are repeatedly moistened by being washed by the water,
subsequently the sprouted grains are filled into a package; the package is closed, vacuumed and subsequently the sprouted grains are heat sterilized in the package,
whereby a liquid component is added to the sprouted grains before the heat sterilization and the amount of liquid component is set in such a way that after the sterilization, cooling and storage before expedition a share of the separable liquid component decreases to zero,
the amount of the liquid component is determined in such a way that the liquid component with the presumed surplus is added to the sprouted grains and after the sterilization, cooling and storage the package with the processed sprouted grains is open, the amount of the separable liquid component is measured, the difference between the added amount of the liquid component and the amount of the separated liquid component is calculated, and this difference is used during the processing of another batch from the same sprouted grains as a correction of the amount of the liquid component.

The deficiencies in the prior state of the art are significantly remedied by the method of the preparation of the sprouted cereal grains, oilseeds or legumes which includes the cleaning and packing of the grains, where after the cleaning the grains are at least half an hour, preferably 1,5 to 18 hours, swelling in the drinkable water and after the swelling the non-absorbed drinkable water is separated according to this invention which essence lies in the fact that after the swelling the grains are placed on the perforated support where they sprout, whereby they are repeatedly moisturized in such a way that they are rinsed with water. Subsequently the sprouted grains are filled into the package in form of the sacks. Such amount of the flavored liquid component is added which the grains absorb during the thermosterilization, cooling and standing. After the heat sterilization the sprouted grains are left to cool to the surrounding temperature and subsequently they are ready, in the undamaged package, for storage or transport at common temperature.

The sprouting allows to release the important nutrients. It increases the content of vitamin C and carotene, it increases the production of vitamins of group B and enzymes. It helps to remove the naturally occurring toxins which can be present on the outer cover of the grains. A complex taste of the grains is increased. The sprouting lowers the content of anti-nutrients (such as phytic acid, phenols, enzyme inhibitors, lectins and saponins), which favorably affects the availability of calcium, iron, zinc, the fission of starches and proteins in the body. During the sprouting a level of proteins increase and the ratio of essential and nonessential amino acids changes, too. During the sprouting of the grains the amount of vitamins increases. For example, the amounts of vitamin B2, vitamin H (biotin), pantothenic acid (B5), pyridoxine (B6) and folic acid increase significantly.

The sprouted grains according to this invention are taste and consistency ready for further use or for the direct consumption without subsequent preparation. This is especially preferable to the baking industry; the sprouted grains are suitable for mixing to the dough before baking and no technological preparation of the sprouted grains is needed.

The term "cereal grains" in this file has to be understood broadly; it will include mainly grains of plant genera and species of Poaceae family, such as wheat, rye, barley, millet, oats, buckwheat, corn, amaranth, lantern, greek hay and so on. It can also concern other similar matured plant grains suitable for human consumption. "Oilseeds" in this text denote crops containing more oil as a stock, such as rape, sunflower, poppy seed, sesame, pumpkin, mustard and so on. The term "legumes" denotes mainly, but not exclusively, plants of pea family (Fabaceae) whose fruit is legume (teat), such as chickpeas, soybeans, peas, garden beans, mung beans, adzuki beans, lentils and so on.

"Swelling" should denote any method of acting of the drinkable water upon the grains which causes a required softening of the grains and absorption of the drinkable water into the grain. Swelling will usually form an independent step in the method, it can be, however, also part of the washing, mainly in the final stage of the multilevel washing. It is important that swelling will take place at least some time before the sprouting.

It is preferable if the sprouting takes place in the dark environment, for example without the access of the sunlight in the closed chambers or in the continual devices. The sprouting take place during the set period at regulated temperature. Pursuant to the type of the grains, the temperature and the period of sprouting ranges between 20°C to 30°C and lasts from 10 to 60 hours, preferably at temperatures 22°C to 28°C during 16 to 48 hours, especially preferably at temperature 22°C during 24 to 30 hours.

The perforated support ensures that the surplus water during the washing flows away. The washing can take place at least once a day (every 24 hours), pursuant to the need and type of the raw material and even often, for example every 12 or 8 or 6 hours. After reaching the desired level of sprouting the raw material is sterilized within 8 hours, preferably it is sterilized just after reaching the desired level of sprouting.

At this point of the method it is preferable, but not necessary, if the sprouted grains are pre-cooked in such a way that they are inserted into hot water and poured over by hot water. This step of pre-cooking can be called "blanching", since the pre-cooking should achieve steep change in the temperature, but in the method according to this invention it is preferable if there is no intentional cooling after the pre-cooking. the blanching is in food industry usually used for the easier peeling of the vegetables or fruit; in the method according to this invention the goal of the pre-cooking is to prepare the sprouted grains for the subsequent effective sterilization. During the sprouting there occur complex biochemic processes in the grains; part of these processes is the production of gases which are released to the grains. After the pre-cooking the steep change in temperature causes the release of gases which were produced during the sprouting. The creation of this clear temporal point in the process increases the repeatability of the processes while the resulting features of the product are maintained.

The pre-cooking of the sprouted grains significantly limits the release of the gases from the sprouted grains at the sterilization stage. Due to this the pre-cooking of already sprouted grains offers a synergetic effect with the subsequent sterilization.

The pre-cooking or blanching of the sprouted grains can be realized in such a way that the sprouted grains are placed in the boiler (cauldron, pot) with the set temperature of the drinkable water, preferably a duplicator boiler is used. It is preferable if the pre-cooking takes place at 75°C to 85°C during 30 seconds to 15 minutes, especially preferably for the period of 5 minutes. After the pre-cooking is finished the sprouted grains can be placed into packages without cooling; in this way the initial heat is transferred through the entry material to the process of sterilization. Even though the pre-cooking allows one to temporally suspend the beginning of the sterilization, it is preferable if the whole process according to this invention runs continually, with a direct temporal continuation of individual steps.

The term "blanching" pursuant to various explanations includes the puring over of the fruit or vegetables with a boiling water and subsequent cooling. In this text, "pre-cooking" or "blanching" denotes a process where the sprouted grains are abruptly exposed to the high temperature water; the water need not to be boiling, temperatures around 80°C suffice. The term "pre-cooking" in this file should not be understood as related to water's boiling point, but as a process where the approach to the boiling point suffices, that is, in general, as a process that in terms of temperature precedes boiling. Reaching the water's boiling temperature (at same, not lowered pressure) would cause undesired loss of nutritional values. Similarly, as opposed to common process, it is not necessary to abruptly cool the sprouted grains by the end of the pre-cooking, since the cooling is done mainly before freezing or for the purposes of easier peeling of fruit or vegetables.

The sprouted grains are sterilized in such a way that they are packed in the final package. In a preferable arrangement the sacks from multilayered flexible foil are used as packages, especially preferably from transparent foil. The matter of the grains in the sack which is placed on the sterilization cart forms a flat body. The sacks in this solution are suitable packages also due to the better transfer of the heat to the middle of the sterilized matter. The vacuuming of the filled package before the closing an sterilization contributes to the better transfer of the heat; whereby the sack's foil adjoins to the sprouted grains, which improves the transfer of the heat.

Due to this reason it will be especially preferable if a single sack will include 0,1 kg to 10 kg of the resulting product, especially preferable weight will be 0,2 to 5,5 kg. The lower limit of the weight can be set for the retail packages for direct consumption, whereby larger packages will be designed as semi-products for food industry. These weight limits are not just subject to market dimensioning, but they result from the essence of the sterilization. The optimal weight amount also depends on the type of grains.

After the completion of the sprouting on the perforated support the grains do not include the separable water component in any significant amount. The water of water solution can be present on the surface of the grains in forms of fine drops, but it is not a typical pickle which should surround the grains as a whole. The separable water or liquid component in this file denotes water or liquid which flows freely out of the mass of sprouted grains without mechanical pressure or centrifugation.

The liquid component is added to the sprouted grains before the sterilization. Usually this is the water component. This can be done before the packing of the sprouted grains into the package or, preferably, the liquid component can be added to the grains to the package before its closing. Then the added liquid component can be pre-heated which lowers the amount of the heat energy which is necessary to be added in course of the subsequent sterilization. In this step the exact amount of the sprouted grains is already in the package; usually the amount is measured by weighing. Exaclty set amount of the liquid component is added to the measured amount of the sprouted grains. The amount of the liquid component is chosen in such a way that after the sterilization, cooling and storing the liquid component is absorbed to the sprouted grains and the share of the separable liquid component is zero or negligible.

The addition of the liquid component in stage where the sprouted grains are placed in the non-closed package has an advantage of preservation of the exact ratio of the weight of the sprouted grains and the liquid component. Were the liquid component added to the whole mass of the sprouted grains before their weighting to the packages, a problem would arise with the uneven ratio of the sprouted grains and the liquid component, since during the feeding of the sprouted grains the liquid component would be picked in various amount, for example, depending on the place and the layer where the sprouted grains are picked from the overall batch.

The exact amount of the liquid component will depend on the type of the cereal grains, oilseeds or legumes, depending on the particular family, genus and species as well as on the initial humidity of the grains and the level of sprouting. The amount of the liquid component will be determined by the trial which confirms for the particular sprouted grains that the liquid component is basically absorbed without remainders. It is preferable if at the beginning of the sterilization the liquid component forms a bath for the sprouted grains which achieves a godo heat conductance, that is, good transfer of the heat in the content. Thanks to the good heat transfer into the content the sterilization takes place evenly in whole volume of the weighed grains but also in the resulting product the liquid component is not observable in the separable form. During the sterilization an absorption of the liquid component to the sprouted grains takes place, whereby it is preferable if by the end of the sterilization the liquid component is not absorbed completely so that it forms a heat conducive environment during the whole course of the steriliztion. The absorption of the separable liquid component takes place subsequently during the cooling and storage before the expedition. It is preferable if the complete absorption of the liquid component takes place within 48 hours since the completion of sterilization. The product is dispatched to the purchasers in a state where it does not have a separable liquid component or where the share of the separable liquid component is negligible, respectively.

This approach with the weighting of the exact amount of the liquid component can be used in case of sterilization of non-sprouted grains, that is, for example, in case of the swelled or cooked grains where the resulting product is a semi-product of soft consistency without the separable liquid component which would limit the possibilities of use as pickle does. An application of the abovementioned method with the exact weighting of the exact amount of the liquid component with sprouted grains is preferable, though, since a synergetic effect is achieved; the sprouts are soaked with the liquid component; they are supple and tasty. In the end product we do not rule out the small but negligible share of the separable liquid component.

The liquid component in most cases will be formed by the drinkable water or water solution. It is preferable if the liquid component is flavoring; there are flavors or aromas dissolved in it which during absorption penetrate the sprouted grains. The term "flavoring" includes such liquid component which adds only a smell to the resulting product without the taste. During the sterilization, cooling and storage the flavoring liquid component is absorbed into the sprouted grains. This results in desired taste or smell and consistency of the sprouted grains. The flavoring liquid component will be mainly salty, but it can also be salty-sour or sweet.

The disclosed process presents a new method of use of the sprouted grains; it brings long period of durability of the product without the addition of chemical preservatives. In such way we obtain food semi-product or a product with high level of fibers, proteins, minerals and important vitamins, which together have beneficial effect and preventive effects on the human organism. It is also preferable if the sprouted grains are in this method rid of impurities. In Europe the agricultural areas are always in the vicinity of industrial and/or transport pollution and thus the washing of the grains in the method according to this invention preferably lowers the content of the undesired substances, surface sludges with heavy metals and dust in the final product. Since the food product according to this invention can form a component of the dough commonly up to 60% of the share of the mass, preferably 20% to 30% of the share of the mass, and such component will only contain purified grains, an overall anorganic purity of the resulting product increases.

Sterilization regime will have following stages programmed - deaeration, heating to 127°C, sterilization at 127°C, cooling. The goal is to achieve the temperature 121°C inside the package with the packed sprouted grains. This can be achieved by setting the sterilization temperature to 125°C, too, but at 127°C his goal is achieved more reliably. The heat sterilization is crucial control point of the process pursuant to the food industry norms and standards. The efficiency of the heat operation is checked by datalogger, for example, which records the whole process of the sterilization in the product.

A food product containing sprouted grains, mainly sprouted cereal grains, oilseeds or legumes processed according to the method of the present invention is also new, pursuant to this invention, whose essence lies in the fact that it contains non-milled, heat sterilized sprouted grains without the separable liquid component of the pickle, whereby the sprouted grains are at least partially swelled and mutually connected by the starch leached during sterilization and eventually partially stiff after sterilization.

The food product pursuant to the abovementioned specification is a new product usable as a semi-product mainly in bakeries or as a product for direct consumption. It has soft, cooked consistency and natural smell and taste, without alien smells and tastes. The color is natural - mainly brown and dark grey pursuant to the used raw material.

In preferable arrangement the product will mainly contain grains of wheat, rye, soybean, chickpeas, peeled kernels of sunflower, spelled wheat, amaranth, all this alone or in combination.

The food product is packed in the vacuumed, mainly flat package, preferably in form of a sack from multilayered, flexible foil, preferably from the transparent foil. The foil has sufficient barrier features and it is resistant against sterilization temperatures. If it is transparent, the consumer sees right inside the type and composition of the product. Pursuant to the reasons mentioned above in relation to method the sacks will have volume ranging from 0,1 kg to 10 kg of the resulting product, preferably 0,2 to 5,5 kg.

With an intention to increase the available taste spectrum, the food product can be flavored by the flavoring liquid compnent which is soaked into the grains.

The food product according to this invention and eventually in combination with flavors offers an entirely new treat to the consumer. It offers a symbiosis of flavors with a natural taste of the basic raw materials. An important advantage is the durability of the sprouted grains packed pursuant to this invention.

The consumption of the food product - either directly or in another products or foods - provides the consumer with valuable fibers, proteins, mineral substances and important vitamins, which together have beneficial effect and preventive effects on the human organism.

The use of the sprouted grains processed pursuant to the abovementioned method as a semi-product in production of bakery products, confectionery products or as a food product for direct consumption, is also new. In case the product will consist from grains of amaranth, it will be preferable to use it as a dietetic food for celiacs.

When using the sprouted grains as a semi-product in the bakery or confectionery production, the product can form a component of the dough in share up to 40% to 60% of the mass. The resulting percent of the used semi-product is determined by the consumer pursuant to the type of the products. The sprouted grains can be also used as a main component for production of the cereal bars.

### Description of drawings

The invention is further disclosed in examples according to figures 1 to 5. The sign depicted on figures 1, 2 and 5 as "heat" denotes a step in which the heat is intentionally supplied to the semi-finished product.
Figure 1 schematically depicts the method of cleaning, swelling, sprouting and sterilizing of the grains. The dashed line during the preparation of the flavouring liquid component depicts an alternative with use of the liquid component in form of the clean drinkable water.
Figure 2 schematically depicts the process of cleaning, swelling and sterilizing of the grains without sprouting. The dashed line during the preparation of the flavouring liquid component depicts an alternative with use of the liquid component in form of the clean drinkable water.
Figure 3 depicts the course of the mass share of the separable liquid component after its addition to the packaging and subsequently during sterilization, cooling and storing. Stage A depicts the addition of the liquid component; stage B is heat sterilization; stage C is cooling; stage D is storage before expedition.
Figure 4 depicts and example of the product packed in the bag with measurement of the temperature during sterilization.
Figure 5 schematically depicts the process of cleaning, swelling, sprouting, pre-cooking and sterilizing of the grains, where the added step of the open pre-cooking improves the preparation of the sprouted grains and subsequent sterilization in the closed packaging.

### Examples of realization

### Example 1

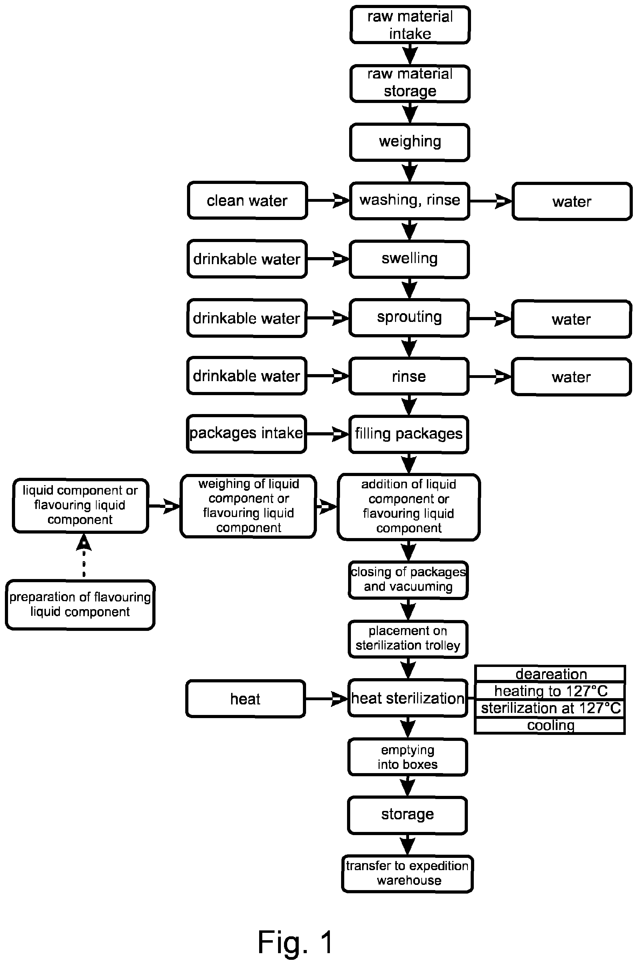

In this example according to figures 1, 3 and 4 the wheat grains are being swelled and canned. The grains are, firstly, washed with the surplus of water, whereby the impurities, surface sediments and dust are removed. After the washing the grains are put into the vessel into which the drinkable water in amount of approximately twice the weight of the grains is added and the grains are let to swell for approximately 6 hours. The level of swelling can be checked continuously, whereby the solidity of multiple grains is measured.

After the swelling the grains are transferred to perforated grates where they sprout at temperature of 22°C for 48 hours. The grains are washed by the drinkable water at least once per 24 hours. The humidity nad heat causes the sprouting of the grains. After the sprouting the grains are filled through the automatic control weight scales into multilayered, flexible, transparent sterilization bags. The dimensions of the bags differ pursuant to the weight of the products, which can range from 200 g to 5500 g. The special material composition of the foil with the respective barrier features from which the bags are made suits the conditions of thermo-sterilization at high temperatures and pressures.

During the process of packing a salty flavouring liquid component is added to the grains which in this case contains edible iodide salt in hot drinkable water. In this example the flavouring liquid component is added to the grains only during the closing of the bags; its amount is measured in such a way that one observes the overall required weight of the product, whereby the grains are weighed by automatic weight scale before their insertion into bag. The liquid flavouring component soaks during sterilization, cooling and standing into the grains. The conent of the water in the flavouring liquid component is set in such a way that its soaking without the separating water is achieved.

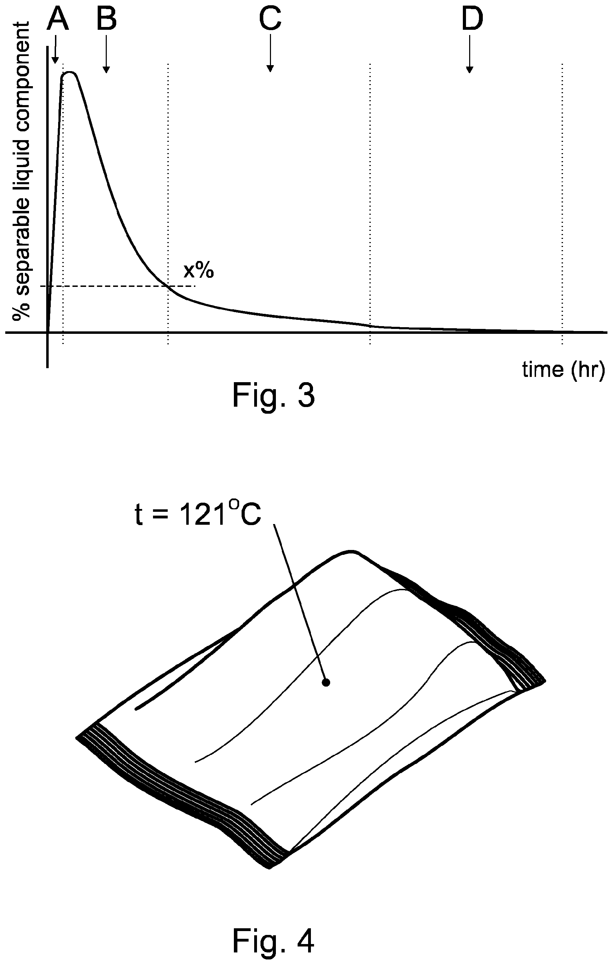

As depicted in the figure 3, after the addition of the liquid component in stage A the relative content of the separable liquid element is maximal. Subsequently during the heat sterilization in stage B its content falls down. At the end of the sterilization the ratio of the separable liquid element achieves non-zero value x which ensures sufficient heat transfer during the stage B of the steriliziation. Subsequently during the cooling in stage C and storing in stage D the ratio falls to final, zero value. The speed of decrease of the ratio of the separable liquid element falls most quickly during the sterilization, then the speed of absorption decreases.

The packed and weighed bags in this example are closed in the vacuum wrapper. The bags are placed into the vacuum chamber where after the closing of the lid, firstly, the vacuuming takes place and then, subsequently, double welding of the bag pursuant to the set programme takes place. The first setting of the period of vacuuming is realized with the hot filling in such a way that the content does not pour out. The period of closure is set pursuant to the used material. After the closing is finished the impenetrability of the double weld is checked.

The filled and closed bags are placed on the sterilization trolleys which carry them into the automatic steam pressure sterilizer. The food product with the grains is sterilized in the programmed regime - deaeration, heating to 127°C, sterilization at 127°C, cooling. The efficiency of the heat sterilization is checked by the datalogger in the geometric middle of the bag.

After the cooling a compact matter is produced where the sprouted grains are connected during the sterilization by the leached solidified starch. The product looks like a mixture of the sprouted grains connected by a starch. It has soft consistency, natural taste and smells after the used components, without alien smells or flavours. The color of the product is brown and semi-gray, natural pursuant to the used raw materials. The content of the NaCl salt is 0,5±0,1%. It does not containt genetically modified organisms. The sprouted grains are used in the baking industry for further processing into the dough in ratio approximately 20-40% or in other fields of food industry, or alternatively as a readymade dish. They have 12 month period of durability and they comply with the microbiological requirements pursuant to the food code. The sprouted grains are stored in a dry place at room temperature.

### Example 2 (not part of the invention)

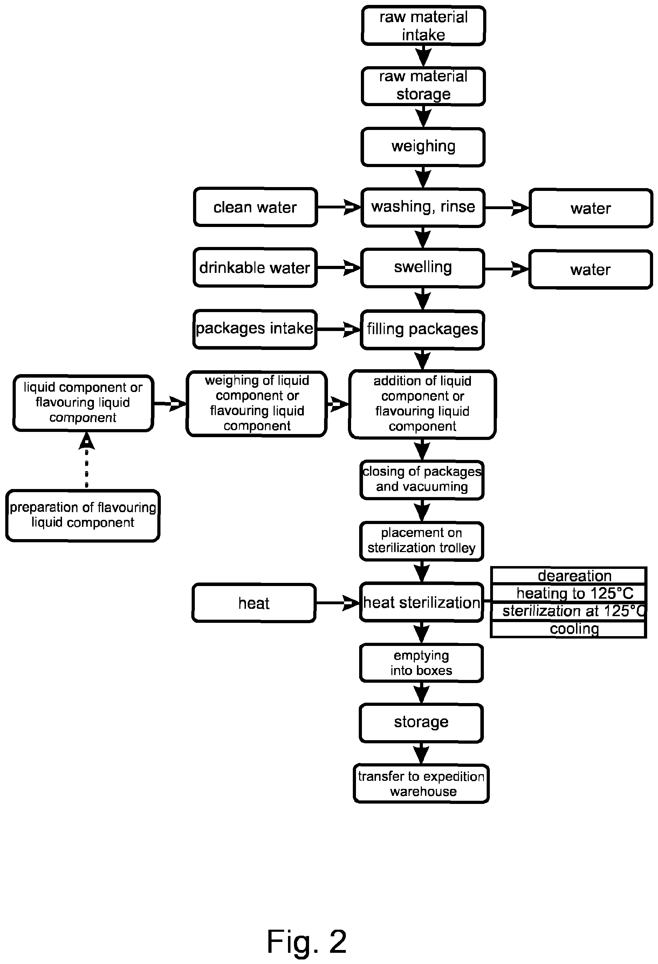

In this example pursuant to figures 2, 3 and 4 the process is applied without the sprouting of the grains. The grains are cleaned, swelled and subsequently filled into the packages in which the sterilization takes place, in this example at temperature 125°C. In another case the grains can be cooked before filling and sterilization.

### Example 3

In order to set the maximal amount of the liquid component which is capable of absorption in 48 hours since the end of the sterilization a method can be chosen where a larger amount of the liquid component is added to the sprouted grains, for example, the amount larger than the amount of the sprouted grains. The amount of the added liquid component is recorded. After the sterilization, cooling and storing the packagning with the processed sprouted grains is open and the amount of separable liquid component is measured. The difference between the amount of added liquid component and subsequently measured separable liquid component is a liquid component absorbed into the particular type of the sprouted grains. The amount of the liquid component and the amount lowered by 10% is subsequently used for the weighing in another cycle of processing of the identical type of the sprouted grains.

### Example 4

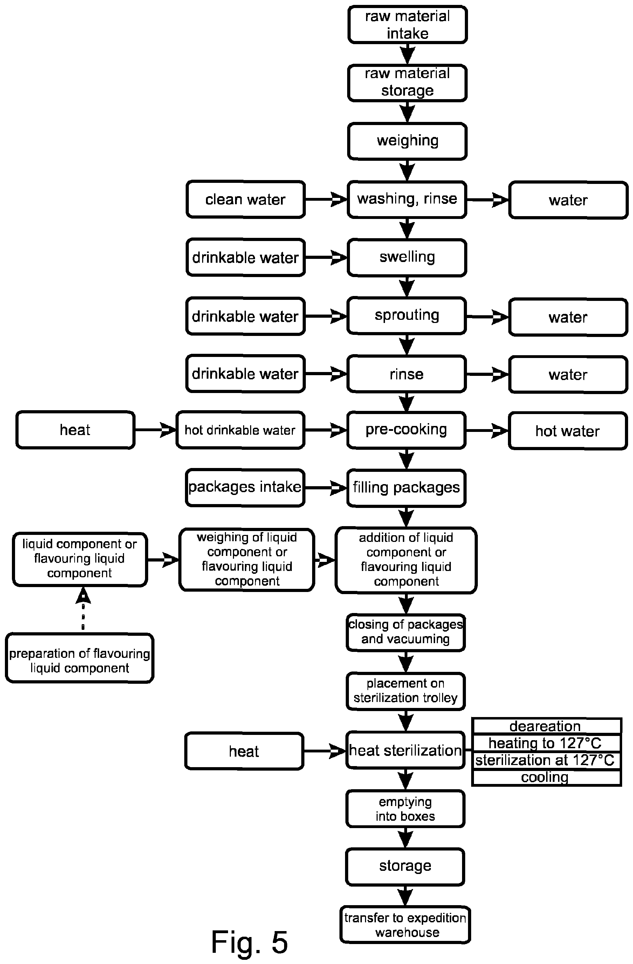

In this example according to figures 3 to 5 the rye grains are sprouted and canned. The grains are, firstly, washed with the surplus of water, whereby the impurities, surface sediments and dust are removed. After the washing the grains are put into the vessel into which approximately double mass amount of the drinkable water is added and the grains are left to swell for approximately 12 hours. The level of swelling can be checked continuously, whereby the solidity of multiple grains is checked.

After the swelling the grains are transferred to perforated grates where they sprout at temperature of 22°C for 30 hours. The grains are washed by the drinkable water at least twice per day. The humidity nad heat causes the sprouting of the grains. The sprouting of the grains significantly increases the vitamins content.

After the sprouting the grains are pre-cooked by 80°C drinkable water for 5 minutes. In this example a duplicator boiler without overpressure with temperature set to 80°C is used for pre-cooking; the temperature is maintained with margin of error ±5°C. The sprouted grains are inserted into the pot with the set temperature and sudden temperature change causes the release of sprouting gases.

After 5 minutes of pre-cooking the sprotued grains are taken out of the pot without intentional cooling and filled through the automatic control weight scales to the multilayered, flexible, transparent sterilization bags. The dimensions of the bags differ pursuant to the weight of the products, which can range from 200 g to 5500 g. The special material composition of the foil with the respective barrier features from which the bags are made suits the conditions of thermo-sterilization at high temperatures and pressures.

During the process of packing a salty flavouring liquid component is added to the grains which in this case contains edible iodide salt in hot drinkable water. In this example the flavouring liquid component is added to the grains only during the closing of the bags; its amount is measured in such a way that one observes the overall required weight of the product, whereby the grains are weighed by automatic weight scale before their insertion into bag. The liquid flavouring component soaks during sterilization, cooling and standing into the grains. The conent of the water in the flavouring liquid component is set in such a way that its soaking without the separating water is achieved. In this example the liquid component is independently pre-heated to 50 to 60°C before the insertion into the bags, which brings temperature closer to the state of the sprouted grains after pre-cooking. The temperature added into the system by pre-heating lowers the temperature demands of the subsequent sterilization.

As depicted in the figure 3, after the addition of the liquid component in stage A the relative content of the separable liquid element is maximal. Subsequently during the heat sterilization in stage B its content falls down. At the end of the sterilization the ratio of the separable liquid element achieves non-zero value x which ensures sufficient heat transfer during the stage B of the steriliziation. Subsequently during the cooling in stage C and storing in stage D the ratio falls to final, zero value. The speed of decrease of the ratio of the separable liquid element falls most quickly during the sterilization, then the speed of absorption decreases.

The packed and weighed bags in this example are closed in the vacuum wrapper. The bags are placed into the vacuum chamber where after the closing of the lid, firstly, the vacuuming takes place and then, subsequently, double welding of the bag pursuant to the set programme takes place. The first setting of the period of vacuuming is realized with the hot filling in such a way that the content does not pour out. The period of closure is set pursuant to the used material. After the closing is finished the impenetrability of the double weld is checked.

The filled and closed bags are placed on the sterilization trolleys which carry them into the automatic steam pressure sterilizer. The food product with the grains is sterilized in the programmed regime - deaeration, heating to 127°C, sterilization at 127°C, cooling. The efficiency of the heat sterilization is checked by the datalogger in the geometric middle of the bag, where it is controlled to achieve the temperature of 121°C.

After the cooling a compact matter is of the sprouted grains with the insignificant amount of the non-bound water is produced. The product has soft consistency, natural taste and smells after the used components, without alien smells or flavours. The color of the product is light to dark brown, natural pursuant to the used raw materials. The content of the NaCl salt is 0,5±0,1%. It does not contain genetically modified organisms. The sprouted grains are used in the baking industry for further processing into the dough in ratio approximately 20-40% or in other fields of food industry, or alternatively as a readymade dish. They have 12 month period of durability and they comply with the microbiological requirements pursuant to the food code. The sprouted grains are stored in a dry place at room temperature.

### Example 5

Sterilization in this example runs in the pre-programmed regime - deaeration, heating to 125°C, sterilization at 125°C, cooling. In the geometric middle of the bag a temperature of 121°C is achieved.

### Industrial applicability

Industrial applicability is obvious. According to this invention it is possible to industrially and repeatedly produce food products including sprouted cereal grains, oilseeds or legumes.

## Claims

1. A method of a preparation of sprouted cereal grains, oilseeds or legumes, including washing, swelling and packing of the grains, where after the washing the grains are for at least half an hour, preferably for 1,5 to 18 hours swelled
in a drinkable water and after the swelling the non-absorbed drinkable water is separated, **characterized by the fact**, that after the swelling the grains are placed on a perforated grate where they sprout under an influence of a heat and a humidity, whereby they are repeatedly moistened by being washed by the water,
subsequently the sprouted grains are filled into a package; the package is closed, vacuumed and subsequently the sprouted grains are heat sterilized in the package,
whereby a liquid component is added to the sprouted grains before the heat sterilization and the amount of liquid component is set in such a way that after the sterilization, cooling and storage before expedition a share of the separable liquid component decreases to zero,
the amount of the liquid component is determined in such a way that the liquid component with the presumed surplus is added to the sprouted grains and after the sterilization, cooling and storage the package with the processed sprouted grains is open, the amount of the separable liquid component is measured, the difference between the added amount of the liquid component and the amount of the separated liquid component is calculated, and this difference is used during the processing of another batch from the same sprouted grains as a correction of the amount of the liquid component.

2. The method of the preparation of the sprouted cereal grains, oilseeds or legumes according to the claim 1 **characterized by the fact,** that the sprouting lasts for 10 to 60 hours, preferably 16 to 48 hours, at temperature from 20 to 30°C, preferably from 22 to 28°C, especially preferably the temperature and period of sprouting is adjusted pursuant to a type of the grains.

3. The method of the preparation of the sprouted cereal grains, oilseeds or legumes according to the claim 1 or 2, **characterized by the fact,** that the swelling of the grains lasts 3 to 18 hours, preferably 12 to 18 hours, especially preferably the period of swelling is adjusted pursuant to the type and firmness of the grains.

4. The method of the preparation of the sprouted cereal grains, oilseeds or legumes according to aby of the claims 1 to 3, **characterized by the fact**, that after the sprouting the grains are pre-cooked, preferably in a drinkable water with temperature 75 to 85°C for a period of 30 seconds to 15 minutes, especially preferably they are pre-cooked in a pot at temperature of 80°C for a period of approximately 5 minutes.

5. The method of the preparation of the sprouted cereal grains, oilseeds or legumes according to aby of the claims 1 to 4, **characterized by the fact**, that the amount of the liquid component is set in such a way that its share in the separable form at the end of the sterilization is non-zero.

6. The method of the preparation of the sprouted cereal grains, oilseeds or legumes according to aby of the claims 1 to 5, **characterized by the fact**, that the liquid component, preferably pre-heated liquid component, is added to the sprotued grains after their insertion to the yet unclosed package.

7. The method of the preparation of the sprouted cereal grains, oilseeds or legumes according to the claim 6 **characterized by the fact,** that the amount of liquid component is measured in such a way that the weight of the package with the sprouted grains is measured and an increment of the weight after the addition of the liquid component is measured.

8. The method of the preparation of the sprouted cereal grains, oilseeds or legumes according to aby of the claims 1 to 7, **characterized by the fact,** that the liquid component is flavouring, whereby it is produced by a dissolution of a respective ingredient in the hot drinking water.

9. The method of the preparation of the sprouted cereal grains, oilseeds or legumes according to aby of the claims 1 to 8, **characterized by the fact,** that the grains are filled into the bags from a multilayered, flexible foil, preferably transparent foil.

10. The method of the preparation of the sprouted cereal grains, oilseeds or legumes according to aby of the claims 1 to 9, **characterized by the fact,** that the heat sterilization takes place during an increased pressure, preferably by means of a steam, whereby the temperature of the grains in the middle of the package that is higher than 80°C is achieved in case of a sour flavouring liquid component and in other case the temperature is higher than 121°C, preferably the heat sterilization has following stages - a deaeration, heating to 127°C, sterilization at 127°C, cooling.

11. Sprouted grains, mainly cereal grains, oilseeds or legumes, processed according to any of the claims 1 to 10 **characterized by the fact,** that they are sprouted, heat sterilized grains without a separable liquid component, whereby the sprouted grains are at least partially swelled and mutually connected by a starch leached during the sterilization.

12. The sprouted grains, mainly cereal grains, oilseeds or legumes according to the claim 11, **characterized by the fact,** that they contain grains of wheat, linen, peeled sunflower kernels, spelled wheat, amaranth, rye, barley, millet, buckwheat, corn, oats, medick, greek hay, oilseed rape, sunflower, poppy, sesame, pea, beans, pumpkin, mustard, lentil, soy, chickpeas, either independently or in mutual combination of at least some of the mentioned types.

13. The sprouted grains, mainly cereal grains, oilseeds or legumes according to the claim 11 or 12, **characterized by the fact,** that package with the grains is vacuumed.

14. A use of the sprouted grains according to any of the claims 11 to 13 as a semi-finished product during a production of a bakery or confectionery products, preferably the semi-finished product forms a component of a dough in a share of 60% of a mass, especially preferably 20% to 30% of the mass, or as a raw material for the production of cereal bars, or for direct consumption.

## Patentansprüche

1. Verfahren zur Herstellung von gekeimten Getreidekörnern, Ölsamen oder Hülsenfrüchten, einschließlich Reinigung, Anschwellung und Verpackung von Körnern, wobei die Körner nach der Reinigung mindestens eine halbe Stunde, vorzugsweise 1,5 bis 18 Stunden lang in Trinkwasser anschwellen und nach dem Anschwellen das Trinkwasser abgeschieden wird, **dadurch gekennzeichnet, dass** die Körner auf einer perforierten Unterlage ausgebreitet werden, wo sie unter Wirkung von Wärme und Feuchtigkeit ankeimen lassen, wobei sie wiederholt durch Spülung mit Wasser angefeuchtet werden,
anschließend werden die gekeimten Körner in die Verpackung angefüllt, die Verpackung wird geschlossen, entlüftet und dann werden die gekeimten Körner in der Verpackung wärmesterilisiert,
wobei davor wird eine flüssige Komponente in die Verpackung noch vor der Wärmesterilisierung hinzugefügt, die Menge der flüssigen Komponente wird so bestimmt, dass diese nach der Sterilisierung, Kühlung und Lagerung vor dem Versand der Anteil der trennbaren flüssigen Komponente auf Null sinkt,
die Menge der flüssigen Komponente wird so bestimmt, dass den gekeimten Körnern eine flüssige Komponente mit einem erwarteten Überschuss zugegeben wird und nach der Sterilisierung, Abkühlung und Lagerung wird die Verpackung mit verarbeiteten gekeimten Körnern geöffnet, die Menge der trennbaren flüssigen Komponente gemessen, die Differenz zwischen der zugegebenen Menge der flüssigen Komponente und der Menge der getrennten flüssigen Komponente berechnet, und diese Differenz bei der Bearbeitung der nächsten Charge derselben gekeimten Körner verwendet wird, um die Menge der flüssigen Komponente bei der Bearbeitung zu korrigieren.

2. Verfahren zur Herstellung von gekeimten Getreidekörnern, Ölsamen oder Hülsenfrüchten nach Anspruch 1, **dadurch gekennzeichnet, dass** die Ankeimung 10 bis 60 Stunden dauert, vorzugsweise 16 bis 48 Stunden, bei einer Temperatur von 20 bis 30 °C, vorzugsweise von 22 bis 28 °C, besonders vorteilhaft, die Temperatur und die Keimzeit sind an die Art der Körner angepasst.

3. Verfahren zur Herstellung von gekeimten Getreidekörnern, Ölsamen oder Hülsenfrüchten nach Anspruch 1 oder 2, **dadurch gekennzeichnet, dass** das Anschwellen von Körnern 3 bis 18 Stunden dauert, vorteilhaft 12 bis 18 Stunden, insbesondere vorteilhaft ist, wenn die Zeit vom Anschwellen an die Art und Härte der Körner angepasst wird.

4. Verfahren zur Herstellung von gekeimten Getreidekörnern, Ölsamen oder Hülsenfrüchten nach beliebigem Anspruch 1 bis 3, **dadurch gekennzeichnet, dass** die angekeimten Körner vorgekocht werden, vorteilhaft ist, wenn sie in Trinkwasser mit einer Temperatur von 75 °C bis 85 °C für 30 Sekunden bis 15 Minuten besonders vorteilhaft ungefähr 5 Minuten lang in einem Kessel mit 80 °C vorgekocht werden.

5. Verfahren zur Herstellung von gekeimten Getreidekörnern, Ölsamen oder Hülsenfrüchten nach beliebigem Anspruch 1 bis 4, **dadurch gekennzeichnet, dass** die Menge der flüssigen Komponente so bestimmt wird, dass ihr Anteil in trennbarer Form am Ende der Sterilisierung ungleich Null ist.

6. Verfahren zur Herstellung von gekeimten Getreidekörnern, Ölsamen oder Hülsenfrüchten nach beliebigem Anspruch 1 bis 5, **dadurch gekennzeichnet, dass** die flüssige Komponente, vor allem die vorgewärmte flüssige Komponente, den angekeimten Körnern zugegeben wird, nachdem sie in eine noch nicht geschlossene Verpackung gegeben worden sind.

7. Verfahren zur Herstellung von gekeimten Getreidekörnern, Ölsamen oder Hülsenfrüchten nach Anspruch 6, **dadurch gekennzeichnet, dass** die Menge der flüssigen Komponente derart gemessen wird, indem das Gewicht der Verpackung mit angekeimten Körnern abgewogen und die Gewichtszunahme bei Zugabe der flüssigen Komponente gemessen wird.

8. Verfahren zur Herstellung von gekeimten Getreidekörnern, Ölsamen oder Hülsenfrüchten nach beliebigem Anspruch 1 bis 7, **dadurch gekennzeichnet, dass** die flüssige Komponente verfeinert wird, diese wird durch Auflösen der entsprechenden Ingredienz in heißem Trinkwasser zubereitet wird .

9. Verfahren zur Herstellung von gekeimten Getreidekörnern, Ölsamen oder Hülsenfrüchten nach beliebigem Anspruch 1 bis 8, **dadurch gekennzeichnet, dass** die Körner in Beutel aus einer mehrlagigen, flexiblen, vorzugsweise transparenten Folie gefüllt werden.

10. Verfahren zur Herstellung von gekeimten Getreidekörnern, Ölsamen oder Hülsenfrüchten nach beliebigem Anspruch 1 bis 9 **dadurch gekennzeichnet, dass** die Hitzesterilisierung unter erhöhtem Druck erfolgt, vorzugsweise mit Hilfe von Dampf erfolgt, wobei in der Mitte der Verpackung die Temperatur der Körner höher als 80 °C bei einer flüssigen Verfeinerungskomponente mit saurem Beigeschmack und in anderen Fällen eine Temperatur höher als 121 °C ansteigt, die Hitzesterilisierung hat von Vorteil die folgenden Phasen: Entlüftung, Erhitzen auf 127 °C, Sterilisierung bei 127 °C, hernach Abkühlen.

11. Gekeimte Körner, insbesondere Getreidekörner, Ölsamen oder Hülsenfrüchte, die nach einem der Ansprüche 1 bis 10 verarbeitet wurden und **dadurch gekennzeichnet sind, dass** sie gekeimt, hitzesterilisiert, ohne trennbare flüssige Komponente sind, wobei die gekeimten Körner zumindest teilweise angeschwollen und miteinander durch die während der Sterilisation ausgelaugte Stärke verbunden sind.

12. Gekeimte Körner, insbesondere Getreidekörner, Ölsamen oder Hülsenfrüchte nach Anspruch 11, **dadurch gekennzeichnet, dass** sie Weizenkörner, Flachs, geschälte Sonnenblumenkerne, Dinkelweizen, Amaranth, Roggen, Gerste, Hirse, Buchweizen, Mais, Hafer, Laternen, Griechisches Heu, Raps, Sonnenblumen, Mohn, Sesam, Erbsen, Bohnen, Kürbiß, Senf, Linsen, Soja, Kichererbsen und zwar allein oder in Kombination von wenigstens einigen von vorgenannten Arten enthalten.

13. Gekeimte Körner, insbesondere Getreidekörner, Ölsamen oder Hülsenfrüchte nach Anspruch 11 oder 12 **dadurch gekennzeichnet, dass** die Verpackung mit den Körnern entlüftet wird.

14. Die Verwendung von gekeimten Körnern nach beliebigem Anspruch 11 bis 13 als Halbzeug bei der Herstellung von Backwaren oder bei der Herstellung von Konditorwaren, von Vorteil ist, wenn das Halbzeug einen Bestandteil des Teigs mit einem Anteil von bis zu 60 Gewichtsprozent besonders vorteilhaft 20 bis 30 Gewichtsprozent bildet oder als Rohstoff für die Herstellung von Getreidestangen oder für den direkten Verbrauch dient.

## Revendications

1. Procédé de préparation des grains germés de céréales, d'oléagineuses ou de légumineuses, comprenant les étapes qui consistent à nettoyer, faire gonfler et conditionner les grains, dans lequel, après que les grains ont été nettoyés, ils se gonflent dans l'eau potable pendant au moins une demi-heure, de préférence entre 1,5 à 18 heures et, après gonflage, l'eau potable non absorbée est séparée,
**caractérisé en ce qu'**après
le gonflement des grains, ceux-ci sont répartis sur un substrat perforé, où ils poussent des germes sous l'action du chaud et de l'humidité, étant humidifiés par rinçage à l'eau,
puis les grains germés sont posés dans une unité de conditionnement, celle-ci étant, par la suite, scellée, mise sous vide et, ensuite, les grains germés sont stérilisés par la chaleur dans l'unité de conditionnement,
et **en ce qu'**avant de procéder à la stérilisation thermique, il est ajouté aux grains germés un composant liquide, la quantité de ce composant liquide étant déterminée de sorte qu'après stérilisation, refroidissement et stockage avant l'expédition, le pourcentage de ce composant liquide séparable diminue à zéro,
la quantité dudit composant liquide étant déterminée en ajoutant un composant liquide avec l'excès attendu aux grains germés et après stérilisation, refroidissement et stockage, l'unité de conditionnement contenant les grains germés travaillés est ouvert, on mesure la quantité de composant liquide séparable, puis on calcule la différence entre la quantité de composant liquide ajoutée et la quantité de composant liquide séparé, la quantité correspondant à cette différence étant utilisée pour travailler un nouveau lot des mêmes grains germés en tant que correction de la quantité de composant liquide.

2. Procédé de préparation des grains germés de céréales, d'oléagineuses ou de légumineuses, selon la revendication 1, **caractérisé en ce que** la germination dure de 10 à 60 heures, de préférence de 16 à 48 heures et s'opère à une température de 20 à 30 °C, de préférence à la température de 22 à 28 °C et, de manière particulièrement préférée, la température et la durée de germination étant adaptées à l'espèce de grains.

3. Procédé de préparation des grains germés de céréales, d'oléagineuses ou de légumineuses, selon la revendication 1 ou 2, **caractérisé en ce que** le gonflement de grains dure de 3 à 18 heures, de préférence de 12 à 18 heurels, plus particulièrement la durée de gonflement étant adaptée à l'espèce et à la dureté de grains.

4. Procédé de préparation des grains germés de céréales, d'oléagineuses ou de légumineuses, selon l'une quelconque des revendications 1 à 3, **caractérisé en ce qu'**après gonflement, les grains germés sont précuits, de préférence dans l'eau potable ayant la température de 75 à 85 °C pendant la période comprise entre 30 secondes et 15 minutes, de manière particulièrement préférée sont précuits dans une marmite à la température de 80 °C pendant environ 5 minutes.

5. Procédé de préparation des grains germés de céréales, d'oléagineuses ou de légumineuses, selon l'une quelconque des revendications 1 à 4, **caractérisé en ce que** la quantité de composant liquide est déterminée de sorte que le pourcentage du composant liquide séparable soit, au terme de la stérilisation, supérieur au zéro.

6. Procédé de préparation des grains germés de céréales, d'oléagineuses ou de légumineuses, selon l'une quelconque des revendications 1 à 5, **caractérisé en ce que** le composant liquide, de préférence précuit, est ajouté aux grains germés après leur insertion dans unité de conditionnement encore non scellée.

7. Procédé de préparation des grains germés de céréales, d'oléagineuses ou de légumineuses, selon la revendication 6, **caractérisé en ce que** la quantité de composant liquide est mesuré en pesant le poids de l'unité de conditionnement contenant les grains germés et qu'en ajoutant le composant liquide, on mesure la prise du poids.

8. Procédé de préparation des grains germés de céréales, d'oléagineuses ou de légumineuses, selon l'une quelconque des revendications 1 à 7, **caractérisé en ce que** le composant liquide est aromatisé, étant produit en solubilisant un ingrédient respectif dans de l'eau potable bouillante.

9. Procédé de préparation des grains germés de céréales, d'oléagineuses ou de légumineuses, selon l'une quelconque des revendications 1 à 8, **caractérisé en ce que** les grains sont mis dans des sacs en film multicouche flexible, de préférence en film transparent.

10. Procédé de préparation des grains germés de céréales, d'oléagineuses ou de légumineuses, selon l'une quelconque des revendications 1 à 9, **caractérisé en ce que** la stérilisation thermique est effectuée à une pression élevée, de préférence à la vapeur, pour obtenir une température des grains au centre de l'unité de conditionnement supérieure à 80 °C dans le cas d'un composant liquide aromatisant acide et une température supérieure à 121 °C dans d'autres cas, de préférence, la stérilisation thermique comprenant les étapes suivantes : désaération, chauffage à 127 °C, stérilisation à 127 °C et refroidissement.

11. Grains germés, en particulier les grains de céréales, d'oléagineuses ou de légumineuses, travaillés selon l'une quelconque des revendications 1 à 10, **caractérisés en ce qu'**ils sont au moins partiellement gonflés et liés les uns aux autres par l'amidon pendant la stérilisation.

12. Grains germés, en particulier les grains de céréales, d'oléagineuses ou de légumineuses, selon la revendication 11, **caractérisés en ce qu'**ils contiennent les grains de : blé, lin, grains décortiqués de tournesol, épeautre, amarante, seigle, orge, millet, sarrasin, maïs, avoine, luzernes, fenugrec, colza, tournesol, pavot, sésame, pois, haricots, citrouille, moutarde, lentilles, soja, pois chiches, seuls ou en combinaison comprenant d'au moins de certaines d'espèces mentionnées.

13. Grains germés, en particulier les grains de céréales, d'oléagineuses ou de légumineuses, selon l'une quelconque des revendications 11 ou 12, **caractérisés en ce que** l'unité de conditionnement des grains est hermétiquement close sous vide.

14. L'utilisation des grains germés selon l'une quelconque des revendications 11 à 13 comme un produit semi-fini dans la fabrication de produits de boulangerie ou dans la fabrication de produits de confiserie, de préférence le produit semi-fini formant un composant de pâte allant jusqu'à 60 % en poids, de manière particulièrement préférée 20 % à 30 % en poids, ou comme une matière première pour les barres de céréales ou la consommation directe.
